# EUROPEAN PATENT APPLICATION

(11) **EP 4 751 790 A1**
(43) Date of publication of application: **03.06.2026**
(21) Application number: 24383196.3
(22) Date of filing: 31.10.2024
(51) Int. Cl.: B01D 1/22, B01D 1/24, F26B 17/18

(54) **WATER AND/OR SOLVENT EXTRACTION SYSTEM AND METHOD FOR WATER AND/OR SOLVENT EXTRACTION USING SUCH A SYSTEM**

(71) Applicant: MECI TECH, SOCIEDAD LIMITADA, 43881 Cunit (Tarragona) (ES)
(72) Inventor: Fernández Puente, Carlos, 43881 Cunit (Tarragona) (ES)
(74) Representative: Ponti & Partners, S.L.P

(57) **Abstract**

It comprises a reactor tank (R) and conveying means (2) for conveying the product inside said reactor tank (R), wherein said reactor tank (R) comprises a tubular body (1) provided with a heat transfer surface (S1) for the product to be treated, and is characterised in that said conveying means comprises a conveyor (2) without central shaft, wherein said conveyor (2) is rotatably mounted inside the tubular body (1) of the reactor tank (R), and wherein said conveyor (2) comprises contact means (11), said contact means (11) including material selected to generate a triboelectric effect by contact or friction with the material of the heat transfer surface (S1).

## Description

### Field of the invention

The present invention relates to a water and/or solvent extraction system and to a method of water and/or solvent extraction employing such system. The system comprises a product concentrating and/or drying module including a reactor tank provided with a heat transfer surface for the product to be treated.

### Background of the invention

Water and/or solvent extraction systems for drying and/or concentrating a product are known, comprising at least one product concentrating and/or drying module, a reactor tank and conveying means for conveying the product inside the reactor tank from an inlet to an outlet. The reactor tank comprises a tubular body provided with a jacket defining a cavity for the passage of a thermal fluid. The inner wall of the jacket defines the heat transfer surface for the product to be treated.

Agitated thin-film evaporators and dryers implement water and/or solvent extraction systems as described in the previous paragraph, and are capable of drying and/or partially concentrating difficult products, such as viscous fluids, materials with high boiling temperatures, sensitive to high temperatures, or requiring long residence times in conventional evaporators. Furthermore, agitated thin-film evaporators or dryers are capable of separating volatile fractions from less volatile components, using mechanical agitation of the product, accompanied by the application of heat. Mechanical agitation conveys the product along the tubular body of the reactor tank while heat is applied indirectly. This process allows the less volatile components of the processed mixture to evaporate. The separation is usually performed under vacuum conditions to maximise the temperature difference. It is thus possible to evaporate at lower temperatures to obtain improved recovery of volatiles.

To date, agitated thin-film evaporators and dryers perform mechanical agitation by means of a rotor that rotates and distributes the liquid or pasty stream in a thin film along the hot inner wall of the tubular body. This film is of a thickness equivalent to the clearance between the tip of the rotor blade and the inner wall of the apparatus. The rapid speed of the rotor tip causes a centrifugal force on the product that allows it to be held at all times against the heated wall along its path. In the horizontal reactor tank configuration, the product to be treated is pushed forward inside the reactor tank by the combined effect of the rotor and the fresh material feed. The passage of the rotor generates localised turbulence that favours heat transfer. Heat exchange occurs from the jacket to the thin film through the hot wall of the tubular body of the reactor tank. The material loses moisture as it moves across the contact surface, becoming a flexible or dry cake, a suspension, or a concentrate or a powder. The generated vapours move towards the outlet located at one of the ends of the reactor tank. The vapour circulates in the free space between the rotor blades and the thin-film surface. Once condensed, the gases are collected in liquid form in a tank and can be treated for component fractionation. As mentioned, the separation of the solvent is normally performed under vacuum conditions to maximise the temperature difference, and for greater recovery of volatile components. At the same time, the vacuum allows processing products sensitive to high temperatures.

However, at present, agitated thin-film evaporators and dryers have numerous drawbacks, such as those described below.

Agitated thin-film evaporators and dryers operate with a fixed total contact surface, designed according to heat exchange area requirements necessary to achieve final product characteristics. In this way, when a large energy exchange is required, the design algorithm yields dimensions of the reactor tank on an industrial scale that require considerable physical space. In addition, the total heat transfer surface of the reactor tank is designed for a material with predefined characteristics, so that a variation of these characteristics may make a design change of the apparatus necessary.

Another drawback of the agitated thin-film evaporators and dryers known to date lies in the fact that the changes of state of the treated material give rise to a significant variation in the thermal properties of this material. This creates a difficulty when handling in the same apparatus the spectrum of physical transitions that occur during the transformation from a diluted solid to a dry powder. For this reason, in many cases it is not possible to reduce the humidity to the desired value in a single step, it being necessary to use different equipment to process the same product.

In view of the above, there is, therefore, a clear need to obtain a water and/or solvent extraction system that resolves the aforementioned drawbacks, providing flexibility to be able to change the material to be processed without considerable alterations of the equipment, and making it possible to reach the desired humidity value in a single step for most products.

### Description of the invention

The aim of the present invention is to provide a system and method of water and/or solvent extraction that overcomes the aforementioned drawbacks and presents the advantages described below.

In accordance with this objective, according to a first aspect, the present invention provides a water and/or solvent extraction system for drying and/or concentrating a product to be treated, which comprises at least one concentrating and/or drying module of said product, where the concentrating and/or drying module includes a reactor tank and conveying means for conveying the product inside said reactor tank from an inlet to an outlet, where said reactor tank comprises a tubular body provided with a heat transfer surface S1 for the product to be treated.

The system is characterised in a novel way in that;
- the conveying means comprises a conveyor without central shaft extending along the tubular body of the reactor tank,
- wherein said conveyor is rotatably mounted inside the tubular body of the reactor tank so as to be capable of operating clockwise or counterclockwise to respectively advance or retract the product inside the tubular body, and
- wherein said conveyor comprises contact means disposed to contact with the heat transfer surface S1 of the tubular body, said contact means including triboelectric material or material selected to generate a triboelectric effect by contact or friction with the material of the heat transfer surface S1 of the tubular body of the reactor tank,
- the system comprising processing and control means configured to command the continuous or interrupted rotation (for example, pulsed) of the conveyor for a predetermined residence time of the product inside the tubular body.

In accordance with the same objective, according to a second aspect, the present invention provides a water and/or solvent extraction method employing the claimed system and comprising the stages described below;
a) rotating the conveyor in a continuous or interrupted manner (e.g. in pulses) to displace the product to be treated from the inlet to the outlet of the tubular body of the reactor tank, and
b) during stage a), evaporating water and/or solvent from the product to be treated and simultaneously generating an electromagnetic field inside the tubular body, wherein said electromagnetic field is obtained by altering the dipole moment of the water and/or solvent molecules by the triboelectric effect created by contact or friction of the material of the conveyor contact means with the material of the heat transfer surface S1 of the tubular body of the reactor tank.

Thanks to these characteristics, the removal of moisture, as in the case of the agitated thin-film evaporator and dryer, occurs by effect of a conductive drying, but in this case modified by the action of an electrostatic field generated internally by the action of the internal conveyor. Unlike agitated thin-film evaporators or dryers, in the present invention, no agitation or turbulence of the material occurs. The transfer takes place on a thin film with material at rest or in motion. This action is achieved by the effect of a conveyor without central shaft that takes the material fed and moves it conveniently inside the apparatus.

The conveyor without central shaft extends along the area or surface S1 of the tubular body where the heat transfer occurs, and advantageously, the conveyor operates in a bidirectional manner (forward or backward), in a continuous or interrupted manner (pulsed), and at fixed or variable speed. This enables modifying the residence time of the material during the operation, and independently of the material feed rate.

Advantageously, the processing and control means is configured so as to be able to command an interrupted rotation provided with a pulsation interval adapted to be able to modify the contact time of the product with the heat transfer surface S1. In this way, the contact time or residence time of the product can vary in the different zones of sensible heat and latent heat of the reactor tank, also allowing a thermal exchange by zones, at slower, or faster, speeds, according to the thermal characteristics of the material being treated.

In the present invention, the conveyor without central shaft moves angularly through the internal space of the tubular body of the reactor tank, forward or backward, pulsed or continuous, generating a triboelectric effect that creates an electrostatic field that modifies the polarity of the water and/or solvent molecules and creates an electromagnetic field, resulting in an increase in the evaporation rate of the water and/or solvent of the treated product.

Surprisingly, the rotation of the conveyor, as well as the configuration of the working mode thereof (pulsed or continuous rotation, speed and direction of travel), generates a triboelectric effect resulting from the friction of the material of the contact means against the material of the heat transfer surface of the tubular body of the reactor tank. The intensity of the triboelectric effect will depend on the operating conditions, pressure and temperature inside the reactor tank, the mode of operation of the conveyor, and the properties of the material being processed.

In particular, it has been observed that the triboelectric effect generates a polarisation of water molecules that, in the case of evaporation, causes an orientation favourable to the weakening of the molecular interactions responsible for condensation during evaporation. On the other hand, polarised water molecules also absorb energy from the electrostatic field, which increases their kinetic energy and, therefore, facilitates evaporation by an indirect and additional supply of energy. This phenomenon, in the presence of a negative pressure or vacuum pressure generates a more orderly and efficient movement of molecules in the vapour phase in the direction of the condenser. Therefore, in the present invention, the vacuum can be used not only as a mechanism for decreasing the evaporation temperature, but is also used as a movement force for water molecules in vapour phase.

Furthermore, when there are polarised particles (dipoles) in motion, an electromagnetic field is created that can be measured directly, and whose dependence on the operation of the conveyor, temperature, and operating pressure can be quantified from empirical estimates for each material. In fact, the field can be modified to facilitate the separation of components by acting on the rotational speed or angular displacement of the conveyor and on the temperature and pressure conditions of the process that is performed in the reactor tank.

The proposed invention is capable of handling the entire spectrum of solids content for a myriad of materials, and obtaining the minimum moisture allowed by the material through the process in a single apparatus. In other words, it is capable of concentrating and drying a large number of materials in the same unit or module, showing great flexibility in terms of the transfer surface required for the concentration and/or drying of the material, enabling expanding or reducing the effective contact surface as necessary by moving the conveyor forward or backward. Thanks to all this, the claimed system and method allows removing the water stored at intracellular or intracapillary level from the products, obtaining drying efficiencies of up to 99.8%. The product to be dried and/or concentrated, may be a solid, a semi-solid and/or a mixture of liquid or pasty fluid.

Additionally, it has been observed that the system of the present invention allows using thermal fluids with low temperatures, without losing performance. For example, preferably, the system uses hot water as a thermal fluid at temperatures between 35°C and 90°C.

Indeed, in the system of the present invention, high temperatures are not necessary, meaning that it is possible to use hot water or other thermal energy sources, such as low temperature waste heat. Accordingly, it avoids having to resort to vapour compression equipment or thermal fluids with high temperatures to provide heat to the system.

In the present invention, triboelectric material will be understood as a material selected to be able to generate triboelectricity, that is, to be able to create an electrical charge generated by contact or friction. In particular, triboelectric material shall be understood as a material selected to generate a triboelectric effect by contact or friction with the material of the heat transfer surface of the tubular body of the reactor tank. The triboelectric effect describes the transfer of electrical charge between two objects or materials when they come into contact with or slide against each other. Triboelectricity generates a field of static electricity when the charge remains on one or both objects or materials.

Preferably, the triboelectric material of the contact means is a material selected so as to have an affinity for electrons different from that possessed by the material of the heat transfer surface of the tubular body of the reactor tank.

Advantageously, the triboelectric material of the contact means is selected to be negatively charged and the material of the heat transfer surface of the tubular body is selected to be positively charged, or vice versa, when both materials contact or rub as the conveyor rotates.

According to an embodiment, the triboelectric material or the material of the contact means of the conveyor comprises polymeric material, or is of polymeric material, and advantageously, said polymeric material comprises plastic material, or is of plastic material, preferably flexible plastic material or plastic material selected such that it is capable of deformation to accumulate elastic potential energy when the conveyor rotates.

Advantageously, according to an embodiment, the heat transfer surface comprises a metal base, or is made of a metal base, e.g. comprises steel, or is made of steel or of a steel base, and the contact means comprise or are made of plastic material selected from one or more of polyvinyl chloride (PVC), polyurethane and/or polyethylene. However, since the magnitude of the triboelectric effect depends on the difference in electron affinity between the materials that come into contact, it will preferably ensure that there is an appropriate affinity difference between the material of the contact means and the material of the heat transfer surface S1 of the tubular body, so that this difference allows the generation of a charge difference and, therefore, the generation of the triboelectric effect by contact or friction.

According to one embodiment, the contact means comprise one or more contact elements configured so as to distribute the product on the heat transfer surface S1 when the conveyor rotates, said one or more contact elements comprising the triboelectric material or the material selected to generate the triboelectric effect by contact or friction with the material of the heat transfer surface S1.

Preferably, the contact elements comprise a plurality of bristles or needles distributed along a surface of the conveyor so as to be capable of contacting with the heat transfer surface S1 of the tubular body, the plurality of bristles or needles comprising the triboelectric material or material selected to generate the triboelectric effect by contact or friction with the material of the heat transfer surface S1. Alternatively, instead of bristles or needles, the contact means may be configured as a continuous coating or block of material, preferably plastic material, disposed to partially cover a surface of the conveyor, said coating or block being intended to contact with the heat transfer surface S1 of the tubular body. Said coating or block of material will also comprise triboelectric material or material selected to generate the triboelectric effect when contacting or brushing against the material of the heat transfer surface S1 of the tubular body.

Agitated thin-film evaporators and dryers of the state of the art comprise an agitator or rotor consisting of a tube where to sheets or blades that contact the material are adhered or welded, but which do not touch the heat transfer surface or inner wall of the tubular body, leaving a free space for the formation of a thin film of material. In the case of the present invention, the conveyor is preferably a conveyor without central shaft that includes contact means that touch and rub against the heat transfer surface, favouring the production of static electricity.

Advantageously, in the present invention, the conveyor distributes the product to be dried over the heat transfer surface (inner wall of the tubular body) with the aid of the plurality of bristles or needles generating an ultra-thin film on the heat transfer surface. Thanks to this, both the heat transfer and the use of the area available for evaporation within the tubular body of the reactor tank are optimised, since an extension of the mass transfer area on the surface of the bristles or needles is obtained.

Also, advantageously, the conveyor also allows cleaning the heat transfer surface for thermal renewal, since the bristles or needles are of high efficiency when removing the solid or processed material, thus minimising the loss of transfer surface by formation of fouling film. The operation of the conveyor generates a friction of the bristles or needles against the heat transfer surface of the tubular body. This friction occurs angularly, with the rotation of the conveyor, or through the release of potential energy when the conveyor moves within the tubular body of the reactor tank. The friction between the bristles or needles and the heat transfer surface generates the triboelectric effect, responsible for the generation of electricity by friction.

According to one embodiment, the contact elements, preferably the bristles or needles, are configured with a predetermined length depending on the product to be treated, advantageously with a length equal to or greater than 2 cm.

Advantageously, the hollow space without central shaft of the conveyor defines, inside the tubular body, an evacuation channel of a vapour flow to a vapour outlet of the reactor tank.

Thanks to this, the present invention contemplates the optimisation of the free space available for the circulation of the vapour to the condenser. This is obtained by the disposal of a conveyor without a core or central shaft that allows space to be freed up within the tubular body of the reactor tank. In other equipment, this space is occupied by moving internal parts that hinder the circulation of vapour to the condenser. Furthermore, having this free space for gas phase circulation allows the suction exerted by the vacuum pump to be distributed evenly throughout the interior of the apparatus, thus decreasing the internal pressure differential caused by accessories or moving parts. In this way, an almost uninterrupted flow of vapour is obtained from the interior of the tubular body towards the condenser.

According to an embodiment, the conveyor without central shaft is a screw conveyor or helical conveyor comprising a conveyor helix configured by way of a spring that extends along the tubular body of the reactor tank, said helix being rotatably mounted with the possibility of being elastically deformed by stretching or torsion as the conveyor helix rotates clockwise or counterclockwise, respectively.

Preferably, the conveyor helix comprises a metal base element configured in the form of said spring and contact means, e.g. bristles or needles, is attached to said metal base.

The spring shape, together with the pressure exerted on it by the motor that drives the rotation of the conveyor, allows an elastic deformation of the conveyor by stretching or twisting, accumulating potential energy during the movement. This potential energy is released during operation according to the activity of the conveyor, forward or backward (bidirectional), pulsed or continuous, and at fixed or variable speed, according to a preset configuration or mode of operation. The magnitude of the accumulated potential energy is variable according to the drying curve of the material during the process, as well as the pressure exerted and the movement of the conveyor.

Surprisingly, it has been observed that the conveyor allows the sudden release of the accumulated material between the bristles or needles throughout the operation by accumulation and release of potential energy, avoiding product losses due to prolonged accumulation.

Thus, for the embodiment wherein the contact elements are made of a flexible polymer, these contact elements allow a dual function to be performed. On the one hand, when the product to be treated has a high-water content, the flexible contact elements allow the creation of an ultra-thin film of material that adheres to the heat transfer surface, allowing contact transfer. On the other hand, the surface of the contact elements themselves allows creating an extra contact area between the product to be treated and the free surface where moisture loss occurs. The greater the number of contact elements, the greater the exposure area for evaporation from the product to be treated.

In particular, it has been observed that, when the product to be treated has already reached a "granular state" or of lower humidity, the contact elements keep the solid in contact, or very close to the heat transfer surface (internal wall of the tubular body) and, since the almost dry material is partially retained by the contact elements, a greater area for evaporation from the solid is also achieved. However, in this granular phase, the extent of adhesion is lower, due to lower moisture in the solid. The material is then free to fall off or become detach. This implies that, although it is temporarily trapped between the contact elements, it is also free to fall off or be expelled into the internal empty space of the conveyor. This occurs naturally by gravity, but is intensified by the release of potential energy from both the conveyor and the flexible contact elements. The release of potential energy occurs, in this phase, as a consequence of the temporary adhesion of the material with lower humidity to the heat transfer surface S1 of the tubular body. This temporary film generates a greater friction force and, as a consequence, it achieves the accumulation of energy on the conveyor. This energy is automatically released with the conveyor movement, causing the release of the accumulated material both on the walls and on the contact elements. When the material is released from the contact elements, the entire surface of the material is exposed so that there is a greater mass transfer from the solid. Moisture can then be released through preferential pathways within the structure of the material, without limitation of the wall or any other contact surface. The material falls leaving the surface of the contact elements free so that they can again lift up the fallen material and repeat the cycle.

According to one embodiment, the tubular body is provided with a jacket wherethrough a thermal fluid circulates, and an inner wall of the tubular body which is in contact with the thermal fluid circulating through the jacket defines the heat transfer surface S1 for the product to be treated.

Advantageously, said jacket comprises a plurality of heat dissipating elements configured and disposed in the thermal fluid passage section to create a turbulent fluid regime capable of creating differentiated heat transfer surfaces along the tubular body.

The differentiated heat transfer zones inside the jacket make it possible to generate sensible heat transfer zones and latent heat zones separately. In this way, it is possible to obtain a unique temperature profile along the jacket that adapts both to the manner of releasing moisture from the material (useful for concentrating solutions) and to the solids drying curve, according to the characteristics and properties of each material. This attribute avoids oversizing of the apparatus, since an intelligent heat supply takes place in a minimum transfer area.

According to one embodiment, the system comprises means for generating a negative atmospheric pressure, preferably a vacuum pressure inside the tubular body.

Negative pressure or vacuum pressure serves a dual function. On the one hand, it decreases the boiling temperature of the water and/or solvent to be extracted and, on the other hand, it is used as a force of movement for the water molecules in the vapour phase. Thus, the flow of vapour in the direction towards the condenser is favoured.

Preferably, the system comprises a plurality of drying and/or concentrating modules of the product to be treated, wherein each of said modules includes a reactor tank, a plurality of said reactor tanks being disposed connected in parallel so that each of the reactor tanks treats in parallel a fraction of the total flow of the product to be treated.

The claimed system enables a multiplication scaling of drying and/or concentrating modules that are coupled in parallel. Thus, the scaling process consists of determining the optimal process conditions for a specific material, feeding the operating parameters into an automated control system for a single module and replicating the operating parameters in a number of modules required to cover the processing capacity. It is only necessary to dimension the vapour extraction of the module arrangement.

Advantageously, the system of the present invention is configured such that it can be installed in mobile or fixed units. For example, it is possible to install the system inside a container 12 m long, 3 m high and 2.6 m wide, to facilitate transport from one area to another.

### Brief description of the drawings

In order to better understand the description made, a set of drawings has been provided which, schematically and solely by way of non-limiting example, represents a practical example of embodiment of the system of the present invention.
Figure 1 shows a diagram of an embodiment of the system including a single product concentrating and/or drying module with a single reactor tank.
Figure 2 is a perspective view of an embodiment of the conveyor without central shaft of the system, which is provided in this case with a plurality of contact elements configured as bristles or needles arranged to contact with the heat transfer surface of the tubular body of the reactor tank. The conveyor includes a conveyor helix configured by way of a spring.
Figure 3 is a front view of the conveyor without central shaft of figure 2.
Figure 4 is a schematic view of a sectioned portion of the tubular body that makes it possible to show the conveyor of figure 2 rotatably mounted inside the tubular body of the reactor tank. The figure shows the heat transfer surface of the tubular body, which in this case is steel, and the bristles or needles of the conveyor whose triboelectric material includes flexible plastic material or plastic material selected to be able to be deformed and accumulate elastic potential energy.
Figure 5 is a detail view of the sectioned portion of the tubular body of figure 4.

### Detailed description of embodiments

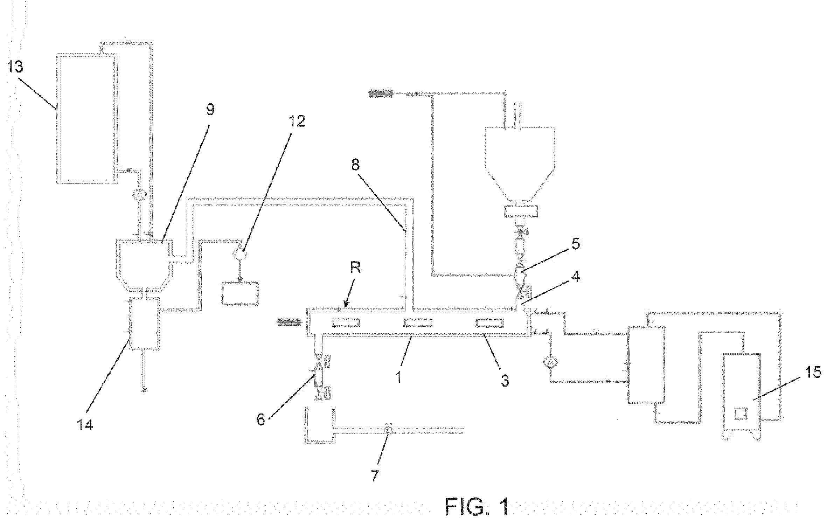

A preferred embodiment of the water and/or solvent extraction system of the present invention is described below with reference to figures 1 to 5.

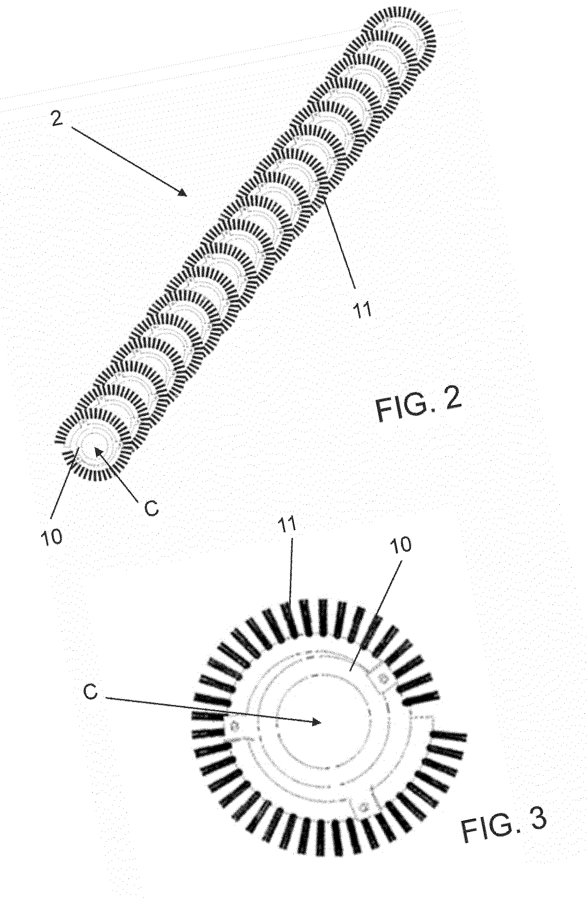

The embodiment of the system shown in figure 1 includes a product concentrating and/or drying module that includes a reactor tank R comprising a tubular body 1 of stainless steel wherein a conveyor 2 without central shaft is rotatably mounted (see figures 2 to 5). The tubular body 1 is provided with a jacket 3 wherethrough a thermal fluid circulates, such that a wall of the tubular body 1, which is in contact with the thermal fluid that circulates through the jacket 3, defines a heat transfer surface S1 for drying and/or concentrating the product to be treated.

In the embodiment described, the tubular body 1 is of cylindrical section, has a length of 5,000 mm and an inner radius of 302 mm, and includes auxiliary elements such as a product inlet 4 from a dosing hopper, a pneumatic dosing valve 5 for vacuum, a product sluice or outlet 6, a product removal pump 7, an outlet 8 for water vapour and/or solvent, and an automated system (not shown) for automatic process control.

As regards the jacket 3, although not seen in the figures, it comprises a plurality of dissipative elements or hydrodynamic rings configured and disposed in the passage section of the thermal fluid so as to allow the fluid to be distributed and zoned to generate areas of high and low thermal transfer. The disposal of the dissipative elements inside the jacket 3 is variable at the convenience of the desired heat transfer during operation, avoiding oversizing of the apparatus.

In the embodiment described and shown in figures 2 to 5, the conveyor 2 without central shaft is a screw, or worm, conveyor of bidirectional operation, which defines a conveyor helix H configured by way of a spring, with the possibility of elastically deforming by stretching or torsion as the helix H rotates clockwise or counterclockwise, respectively. The hollow inner space of the helix H defines inside the tubular body 1 a channel C for evacuation of a vapour flow to the outlet 8 of the tubular body 1, which is connected to a vapour condenser 9.

The spring shape, together with the pressure that is exerted on it through a drive motor, allows an elastic deformation of the conveyor 2 by stretching or twisting, accumulating potential energy during angular displacement due to an increase in resistance to displacement produced, for example, by a temporary adhesion of the material with lower humidity to the inner walls of the tubular body 1. The accumulated potential energy is released during the process when the conveyor moves, forward or backward (bidirectional), pulsed or continuous, and at fixed or variable speed, according to a preset working configuration. The magnitude of the accumulated potential energy is variable according to the drying curve of the material during the process, as well as the pressure exerted by the motor on the conveyor 2.

According to one embodiment, the conveyor helix H comprises a spring-shaped metal base element 10 and, as can be seen in figures 2 to 5, the surface of this metal base element 10 includes a plurality of bristles 11 or needles distributed and arranged so as to be able to make direct contact with the heat transfer surface S1 of the tubular body 1 of the reactor tank R.

In the described embodiment, the bristles 11 or needles are made of a flexible polymer, e.g. made of polyethylene, which is a triboelectric material or a material selected to generate a triboelectric effect by contact or friction with the stainless-steel material of the heat transfer surface S1 of the tubular body 1.

When the product to be treated is still a liquid or pasty mixture, the bristles 11 constitute contact means that allows the creation of an ultra-thin film of material that adheres to the surface S1 of the tubular body 1 allowing the transfer of heat by contact. The same effect is created on the surface of the bristles 11 themselves, enabling an extra contact area. Subsequently, when the product to be treated has already reached a granular or lower-moisture state, the bristles 11 keep the product in contact with the heat transfer surface S1 and, at the same time, retain a portion of the adhered product on its own surface.

The aforementioned potential energy accumulation occurs during the granular state phase of the product to be treated, due to the temporary adhesion of the material with lower humidity to the heat transfer surface S1. The adhered film generates a greater friction force, i,e. an increase in resistance to angular displacement of the conveyor 2, which enables the accumulation of potential energy in the spring-shaped metal base element 10. This energy is subsequently released, facilitating the fall of the adhered material both on the surface S1 of the tubular body and on the bristles 11.

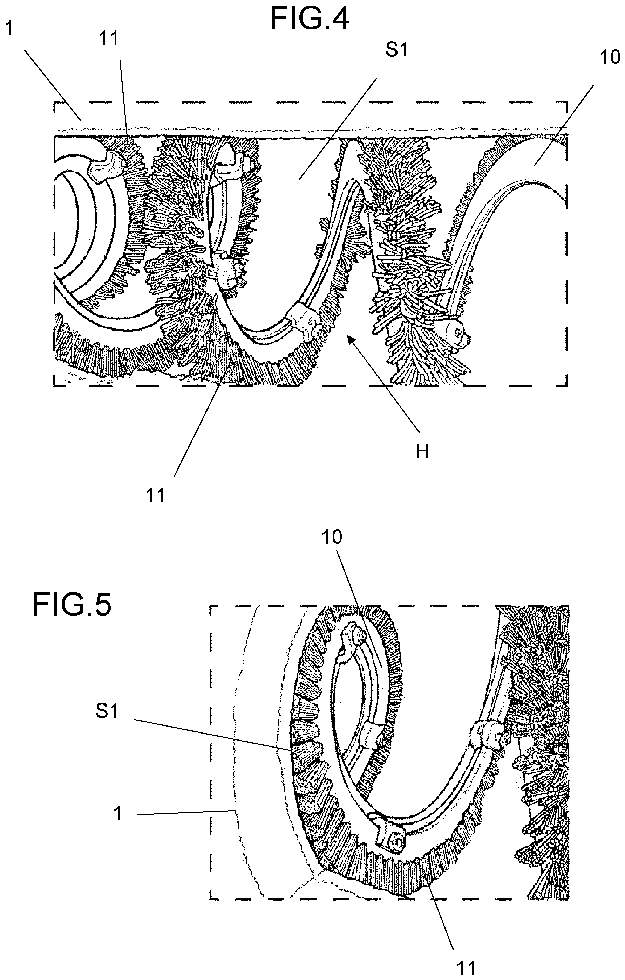

In the present invention, the operation of the conveyor 2 generates a friction of the contact means, for example the bristles 11, against the heat transfer surface S1 of the tubular body 1 (see figures 4 and 5). This friction occurs angularly, with the rotation of the conveyor 2, or longitudinally, when the release of potential energy takes place. In any case, the friction of the bristles 11 with the heat transfer surface S1 generates a triboelectric effect because the materials in contact have been selected with different affinity for electrons.

In the embodiment described, the polymeric material of the bristles 11 acts as an electron receptor, acquiring a negative charge, while the stainless-steel material of the heat transfer surface S1 of the tubular body 1 acts as an electron donor, acquiring a positive charge upon contact with the polymeric material of the bristles 11. This charge difference between materials generates a static electric field that modifies the polarity of the water or solvent molecules, obtaining an increase in the evaporation rate of the material.

Indeed, it has been observed that the triboelectric effect generated with the movement of the conveyor 2 produces a polarisation of the water and/or solvent molecules which, in the case of evaporation, generates an orientation favourable to the weakening of the molecular interactions responsible for condensation during evaporation. In particular, it has been observed that the alteration of the dipole moment of the water and/or solvent molecules allows generating an electromagnetic field inside the tubular body 1 that can be measured directly, and whose dependence on the operation of the conveyor, temperature, and operating pressure can be quantified from empirical estimates for each material. This electromagnetic field very significantly modifies and improves the evaporation process that takes place inside the reactor tank R.

On the other hand, polarised water and/or solvent molecules also absorb energy from the electric field, which increases their kinetic energy and, therefore, facilitates evaporation by an indirect and additional supply of energy. This phenomenon, in the presence of a negative pressure (vacuum) generates a more orderly and efficient movement of molecules in the vapour phase in the direction of the vapour condenser 9. Thus, in this case, the vacuum is not only used as a mechanism to decrease the evaporation temperature, but is also used as a movement force for water and/or solvent molecules in the vapour phase. The final product is ejected through the outlet sluice 6 and stored in a tank.

The water vapour and/or solvent removed and polarised, travels through the vapour flow channel C of the conveyor 2 along the reactor tank R until reaching the vapour outlet 8. From there, by the pulling action of a vacuum pump 12, accompanied by the effect of molecular polarization, it reaches the vapour condenser 9, where the latent heat for phase change is extracted. The condensed vapour flow is conducted to the cooler 13, where sensible heat is removed, and from there the fluid is conducted back to the condenser 9, where it acts as a cooling fluid, to then be collected in a condensate tank 14.

According to a preferred embodiment, the thermal fluid used for the heat exchange is water and, advantageously, water at a temperature comprised between 35°C and 90°C.

Indeed, surprisingly, it has been observed that high temperatures are not necessary in the claimed system and method, so it is avoided having to resort to vapour compression equipment or high temperature sources to provide heat to the process, also maintaining the water and/or solvent extraction efficiency, which can reach extraction values equal to or greater than 99%.

In order to heat the water that is fed to the jacket 3 of the reactor tank R, the system has a heating device 15 that can be, for example, a biomass boiler, or a device that provides waste heat from the industrial installation where the system is implanted. The flow of hot water that is fed to the jacket 3 operates in a closed circuit.

Two practical examples of application of the claimed system and method, for the extraction of water and/or solvent from organic sludge and brine, according to the embodiment of the system described in figures 1 to 5, are described below.

In both practical examples, hot water is used as the thermal fluid circulating in the jacket 3 of the tubular body 1, and the conveyor 2 without central shaft consists of the helix-shaped metal base element 10 H whereto the bristles 11 of flexible polymeric material, e.g. of flexible or deformable plastic material such as polyethylene, disposed to contact with the steel heat transfer surface S1 of the tubular body 1 are coupled. The processing and control means of the system are configured to operate the conveyor by sub-cycles and cycles for a predetermined residence time of the product in the reactor tank R. An operating cycle of the conveyor 2 is composed of several sub-cycles, which vary according to the physicochemical properties of the product to be treated. Sub-cycles include clockwise or counterclockwise rotation of the conveyor 2 and, in some cases, an intermediate pause that distinguishes one sub-cycle from another. An operating cycle of the conveyor 2 will be made up of a predetermined number of sub-cycles to reach a specific water content in the output product.

### Example 1. System and method for extracting water and/or solvent from organic sludge

### Physicochemical properties of organic sludge

▪ Initial humidity of the organic sludge at the inlet of the reactor tank R: 95 wt. %.
▪ Final moisture obtained from the organic sludge at the outlet of the reactor tank R: 9 wt. %.

### Operating parameters

▪ Feed rate of organic sludge: 196 g/dose.
▪ Working pressure of the reactor tank R: 36.7 mbar of absolute pressure or vacuum pressure.
▪ Flow rate and working temperature of water (thermal fluid) of the jacket 3: 4.2 m³/h of water flow at 80°C.
▪ Product residence time in the reactor tank R: 69 seconds.
▪ Conveyor 2 speed: in a range between 410 rpm and 430 rpm, preferably between 415 rpm and 420 rpm for all cycles and sub-cycles.
▪ Electromagnetic field generated by altering the dipole moment of water and/or solvent molecules through the triboelectric effect: oscillates about 8 mG (milli Gauss).
▪ Treated organic sludge production: 44.10 kg/h of sludge with a humidity of 9% by weight.

The process begins with the loading of the organic sludge to be treated in a hopper, wherefrom it is fed to the pneumatic vacuum valve 5, wherefrom it will be dosed into the reactor tank R, maintaining the feed rate of 196 g/dose.

The sludge is fed into the tubular body 1 through the inlet 4 and is received by the bristles 11 of the conveyor 2 which collect and distribute it throughout the heat transfer surface S1 of the tubular body 1. As the material is transported angularly from the inlet 4 to the outlet 6 of the tubular body 1, the sludge releases moisture. The process is continuous and the material is moved along the reactor tank R according to a previous operating configuration of the conveyor 2.

As mentioned, the rotation of the conveyor 2, as well as the previous configuration of its operation (pulses or continuous, speed, unidirectional or bidirectional displacement) generates a triboelectric effect, which is a product of the friction of the bristles 11 against the inner steel wall (the heat transfer surface S1) of the reactor tank R.

The residence time of the material inside the apparatus is determined both by the action of the conveyor 2 (speed, pulses, forward or backward travel), and by the inclination angle of the reactor tank R, in addition to the working temperature and pressure.

In the practical example described, the residence time of the sludge inside the reactor tank R is 69 seconds, and the conveyor 2 is programmed to operate in cycles and sub-cycles, so that;
- one sub-cycle for sludge consists of an angular displacement of the helix H of the conveyor 2 for a time of 4 seconds and a pause of 10 seconds,
- one cycle for sludge consists of 4 sub-cycles, two of rotation of the helix H in a clockwise direction (forward movement of the product) and two of rotation of the helix H in a counterclockwise direction (backward movement of the product),
- after the completion of the 4 sub-cycles that complete a cycle, a counterclockwise rotation of the helix H(backward displacement of the product) is activated for a time of 9 seconds, where the material with lower humidity generates an increasing resistance according to its moisture content, and
- finally, an advance cycle (rotation of the helix H in a clockwise direction) is added towards the outlet lock 6 for a time of 14 seconds, allowing the fraction of material that has already reached the desired humidity to be displaced towards the outlet lock.

During the displacement, the bristles 11 take the sludge material and distribute it on the internal area or heat exchange surface S1 of the tubular body 1, allowing the extraction of moisture by direct contact, and the degradation of the initial mass of the dosed sludge converting it into smaller particles. This phenomenon occurs along the entire extension of the conveyor 2 and during the drying process of the material.

The extracted and polarised water vapour travels through channel C of the helix H until reaching the outlet 8. From there, by the pulling action of the vacuum pump 12, accompanied by the effect of molecular polarisation, it reaches the condenser 9.

### Example 2. System and method for extracting water and/or solvent from brine

### Physicochemical properties of brine

▪ Initial humidity of the brine at the inlet of the reactor tank R: 300g/L of water.
▪ Final moisture obtained from the treated brine (salt) at the outlet of the reactor tank R: 9 wt. %.

### Operating parameters

▪ Feed rate of brine: 72 L/h.
▪ Working pressure of the reactor tank R: 30 mbar of absolute pressure or vacuum pressure.
▪ Flow rate and working temperature of water (thermal fluid) of the jacket 3: 3.5 m³/h of water flow at 80°C.
▪ Product residence time in the reactor tank R: 98 seconds.
▪ Conveyor 2 speed: in a range between 470 rpm and 490 rpm, preferably between 480 rpm and 486 rpm for all cycles and sub-cycles.
▪ Electromagnetic field generated by altering the dipole moment of water and/or solvent molecules through the triboelectric effect: oscillates about 2.40 mG (milli Gauss).
▪ Treated brine (salt) production: 24 kg/h of salt with a humidity of 9% by weight.

The process begins with the loading of the brine to be treated in a hopper, wherefrom it is fed to the pneumatic vacuum valve 5, wherefrom it will be dosed into the reactor tank R, maintaining the feed rate of 72 L/h.

The brine is fed into the tubular body 1 through the inlet 4 and is received by the conveyor 2 and the bristles 11 which collect and distribute it throughout the heat transfer surface S1 of the tubular body 1. As the material is transported angularly from the inlet 4 to the outlet 6 of the tubular body 1, the brine releases moisture. The process is continuous and the material is moved along the reactor tank R according to a previous operating configuration of the conveyor 2.

As mentioned, the rotation of the conveyor 2, as well as the previous configuration of its operation (pulses or continuous, speed, unidirectional or bidirectional displacement) generates a triboelectric effect, which is a product of the friction of the bristles 11 against the inner steel wall (heat transfer surface S1) of the reactor tank R.

The residence time of the material inside the apparatus is determined both by the action of the conveyor 2 (speed, pulses, forward or backward travel), and by the inclination angle of the reactor tank R, in addition to the working temperature and pressure.

In the practical example described, the residence time of the brine inside the reactor tank R is 98 seconds, and the conveyor 2 is programmed to operate in cycles and sub-cycles, so that;
- one sub-cycle for brine consists of an angular displacement of the helix H of the conveyor 2 in a clockwise direction (displacement of the product forward) for a time of 3 seconds and a pause of 4 seconds,
- one cycle for brine is composed of 6 sub-cycles of rotation of the helix H in a clockwise direction (displacement of the product forward),
- once the 6 sub-cycles that complete a cycle have ended, a second cycle is activated for brine that includes 6 sub-cycles, where each sub-cycle consists of a counterclockwise rotation of the helix H (displacement of the product backwards) for a time of 3 seconds and a pause of 3 seconds,
- Finally, an advance cycle (rotation of the helix H in a clockwise direction) is added towards the outlet sluice 6 for a time of 20 seconds, allowing the fraction of dry material (salt) to be displaced towards the outlet sluice 6.

During the movement, the bristles 11 distribute the brine to be treated on the heat transfer surface S1, generating an ultra-thin film of product that, when releasing moisture, creates salt flakes. The counterclockwise movement of the conveyor 2 breaks the flakes and turns them into grains of salt.

In this case, the formation of flakes contributes to generating a resistance to the displacement of the helix H of the conveyor 2, accumulating potential energy by deformation that is released during the process, favouring the fall of the adhered product on the heat transfer surface S1 or on the bristles 11, and intensifying the triboelectric effect.

The removed and polarised water vapour travels through the channel C of the helix H until reaching the outlet 8. From there, by the pulling action of the vacuum pump 12, accompanied by the effect of molecular polarisation, it reaches the condenser 9.

In both practical examples, the feed rate of the product to be treated does not exert a thrust force inside the reactor tank R, but the conveyor 2 is responsible for moving the material angularly. In this way, the drying or concentration of the material is not limited by the force exerted by the feed. In contrast, the overall evaporation rate is independent of the rate of insertion of material into the apparatus, and instead depends clearly on the trajectory of the material along the apparatus and the residence time within the apparatus due to the effect of the conveyor. Thanks to this, the contact surface can be maximised and therefore the heat transfer within the apparatus can be optimised. In addition, in the claimed system and method, the residence time is no longer a relevant factor in the treatment of heat-sensitive materials, since the extraction process can be carried out at low temperatures, and the drying and/or concentration depends on the mode of operation and configuration of the conveyor 2, which allows generating the triboelectric effect that favours the increase of the evaporation rate of the material.

Although reference has been made to a specific embodiment of the extraction system and method claimed, it is clear to a person skilled in the art that the system and method described are susceptible to numerous variations and modifications, and that all the details mentioned can be replaced by other technically equivalent ones, without departing from the scope of protection defined by the attached claims. For example, although an example has been described wherein the working pressure inside the reactor tank R is negative (below atmospheric pressure), it would also be possible, for certain types of product, to work with atmospheric pressures. Likewise, although an embodiment of the system has been described that uses hot water as a thermal fluid, it would also be possible, for certain types of product, to work with thermal fluids other than water. Furthermore, although an embodiment of the contact means comprising a plurality of bristles 11 of polymeric material has been described, it would also be possible to obtain optimal results or the like with a contact means configured in the form of a block of polymeric material coupled to the surface of the conveyor 2.

## Claims

1. Water and/or solvent extraction system for drying and/or concentrating a product to be treated, comprising at least one concentrating and/or drying module of said product, wherein the concentrating and/or drying module includes a reactor tank (R) and conveying means (2) for conveying the product inside said reactor tank (R) from an inlet (4) to an outlet (6), wherein said reactor tank (R) comprises a tubular body (1) provided with a heat transfer surface (S1) for the product to be treated, **characterised by** the fact that;
- said conveying means comprise a conveyor (2) without central shaft extending along the tubular body (1) of the reactor tank (R),
- wherein said conveyor (2) is rotatably mounted inside the tubular body (1) of the reactor tank (R) so that it is susceptible of operating clockwise or counterclockwise to respectively advance or retract the product inside the tubular body (1), and
- wherein said conveyor (2) comprises contact means (11) arranged to contact with the heat transfer surface (S1) of the tubular body (1), said contact means (11) including triboelectric material or material selected to generate a triboelectric effect by contact or friction with the material of the heat transfer surface (S1),
- said system comprising processing and control means configured to command the continuous or interrupted rotation of the conveyor (2) for a predetermined residence time of the product inside the tubular body (1).

2. Water and/or solvent extraction system according to claim 1, wherein said contact means (11) comprises one or more contact elements configured so as to distribute the product on the heat transfer surface (S1) when the conveyor (2) rotates, said one or more contact elements comprising the triboelectric material or material selected to generate the triboelectric effect by contact or friction with the material of the heat transfer surface (S1) of the tubular body (1).

3. Water and/or solvent extraction system according to any of claims 1 to 2, wherein said contact means comprise a plurality of bristles (11) or needles distributed along a surface of the conveyor (2) so as to be susceptible of contacting with the heat transfer surface (S1) of the tubular body (1), the plurality of bristles (11) or needles comprising the triboelectric material or material selected to generate the triboelectric effect by contact or friction with the material of the heat transfer surface (S1).

4. Water and/or solvent extraction system according to any of claims 1 to 3, wherein said triboelectric material or material selected to generate the triboelectric effect comprises polymeric material capable of acting as an electron receptor and acquiring a negative charge by contact or friction with the heat transfer surface (S1) of the tubular body (1).

5. Water and/or solvent extraction system according to claim 4, wherein said polymeric material comprises flexible plastic material or plastic material selected such that it is capable of deforming and accumulating elastic potential energy when the conveyor (2) rotates.

6. Water and/or solvent extraction system according to any one of claims 1 to 5, wherein said conveyor (2) comprises a helical conveyor or screw conveyor without central shaft.

7. Water and/or solvent extraction system according to claim 6, wherein said helical conveyor or screw conveyor without central shaft comprises a conveyor helix (H) configured by way of a spring that extends along the tubular body (1) of the reactor tank (R), said helix (H) being rotatably mounted with possibility of being elastically deformed by stretching or torsion when rotating the conveyor helix (H) clockwise or anticlockwise, respectively.

8. Water and/or solvent extraction system according to claim 6, wherein the conveyor helix (H) comprises a metal base element (10) configured in the form of said spring and wherein said contact means (11) is attached to said metal base element (10).

9. Water and/or solvent extraction system according to any of the preceding claims, wherein the hollow space without central shaft of the conveyor (2) defines, inside the tubular body (1), an evacuation channel (C) of a vapour flow to a vapour outlet (8) of the reactor tank (R).

10. Water and/or solvent extraction system according to any of the preceding claims, wherein said tubular body (1) is provided with a jacket (3) wherethrough a thermal fluid circulates, and wherein a wall of the tubular body (1) that is in contact with the thermal fluid circulating through the jacket (3) defines said heat transfer surface (S1) for the product to be treated.

11. Water and/or solvent extraction system according to claim 10, wherein said jacket (3) comprises a plurality of heat dissipating elements configured and arranged in the thermal fluid passage section to create a turbulent fluid regime capable of providing differentiated heat transmission surfaces along the tubular body (1).

12. Water and/or solvent extraction system according to any of the preceding claims, comprising means (12) for generating a vacuum pressure inside the tubular body (1).

13. Water and/or solvent extraction system according to any of the claims, comprising a plurality of concentrating and/or drying modules of the product to be treated, wherein each of said modules includes a reactor tank (R), a plurality of said reactor tanks (R) being arranged connected in parallel so that each of the reactor tanks (R) treats in parallel a fraction of a total flow of the product to be treated.

14. Method of water and/or solvent extraction by means of the system according to any of claims 1 to 13, comprising the stages of:
a) rotating the conveyor (2) in a continuous or interrupted manner to move the product to be treated from the inlet (4) to the outlet (6) of the tubular body (1) of the reactor tank (R),
b) during stage a), evaporating water and/or solvent from the product to be treated and simultaneously generating an electromagnetic field inside the tubular body (1), wherein said electromagnetic field is obtained by altering the dipole moment of the water and/or solvent molecules by means of the triboelectric effect created by contact or friction of the material of the contact means (11) of the conveyor (2) with the material of the heat transfer surface (S1) of the tubular body (1) of the reactor tank (R).

15. Method of water and/or solvent extraction according to claim 14, wherein said conveyor without central shaft comprises a conveyor helix (H) configured as a helical spring extending along the tubular body (1) of the reactor tank (R), said helix (H) being rotatably mounted with possibility of being elastically deformed by stretching or torsion as the conveyor helix (H) rotates clockwise or counterclockwise, respectively, comprising during stage a);
i. rotating the conveyor helix (H) in a continuous or interrupted manner to generate an elastic deformation of the helical spring caused by an increase in resistance to the displacement of the conveyor helix (H), said elastic deformation allowing the accumulation of potential energy, and
ii. releasing the potential energy accumulated by the elastic deformation of the helical spring to detach partially dried and/or concentrated product to be treated adhered on the heat transfer surface (S1) of the reactor tank (R) and/or on the contact means (11).
